# EUROPÄISCHE PATENTANMELDUNG

(11) **EP 0 865 821 A1**
(43) Veröffentlichungstag der Anmeldung: **23.09.1998**
(21) Anmeldenummer: 98104830.9
(22) Anmeldetag: 17.03.1998
(51) Int. Cl.: B01J 19/18, B01J 19/20, C08F 2/18, C08F 2/20

(54) **Verwendung eines Mehrstufenrührers zur Herstellung von Polymerisaten**

(30) Priorität: 17.03.1997 DE 19711022
(71) Anmelder: BASF AKTIENGESELLSCHAFT, 67056 Ludwigshafen (DE)
(72) Erfinder: Rupaner, Robert, Dr., 67158 Ellerstadt (DE); Sven, Lawrenz, 68161 Mannheim (DE); Bauer, Gerhard, Dr., 69469 Weinheim (DE); Dobbelaar, Johannes, Dr., 67157 Wachenheim (DE); Nahstoll, Jürgen, Dr., 67304 Eisenberg (DE); Müseler, Franz-Josef, Dr., 67435 Neustadt (DE); Ferber, Axel, 67550 Worms (DE); Hartmann, Jürgen, Dr., 67227 Frankenthal (DE); Keller, Peter, Dr., 69493 Hirschberg (DE); Meister, Martin, Dr., 67434 Neustadt (DE); Neutzner, Josef, Dr., 67434 Neustadt (DE); Rehmer, Gerd, Dr., 67259 Beindersheim (DE)
(74) Vertreter: Kinzebach, Werner, Dr.

(57) **Zusammenfassung**

Die vorliegende Erfindung betrifft die Verwendung mindestens eines ein- oder mehrstufigen Rührers, der neben einer tangentialen Strömungskomponente auch ein axiales Strömungsfeld erzeugt, in einem Rührkesselreaktor bei der Herstellung von Polymerisaten durch Flüssigphasenpolymerisation.

## Beschreibung

Die Erfindung betrifft die Verwendung eines ein- oder mehrstufigen Rührers.

Die Herstellung von Polymerisaten durch Flüssigphasenpolymerisation wird üblicherweise in Substanz-, Lösungs-, Fällungs-, Suspensions- und Emulsionspolymerisation unterteilt, wobei sich die Emulsionspolymerisation und die Suspensionspolymerisation von den anderen Verfahren dadurch unterscheiden, dass sie bereits mit einer zweiphasigen Ausgangsmischung beginnen. Die Polymerisationsreaktion wird dabei entweder im Batch-Reaktor, im kontinuierlichen Strömungsrohr, in der Rührkesselkaskade oder im kontinuierlichen Rührkesselreaktor durchgeführt. Die Kesselreaktoren haben in der chemischen Industrie dabei die größte Bedeutung erlangt, da sie eine sehr große Flexibilität bezüglich der Betriebsbedingungen und der Betriebsweise aufweisen und an fast alle Prozesserfordernisse angepasst werden kann. Rührkesselreaktoren eignen sich für diskontinuierliche und kontinuierliche Betriebsweise und sie besitzen einen weiten Einsatzbereich, der vom Laborkessel bis zum Großreaktor reicht. Rührkesselreaktoren sind in standardisierter Bauweise für zahlreiche Anwendungen in verschiedensten Werkstoffen und Werkstoffkombinationen erhältlich. Rührkesselreaktoren sind leicht begeh- und reinigbar und erlauben eine relativ einfache Umstellung auf andere Polymerisationsreaktionen (s. z. B. Ullmann, Band 3, 4. Aufl., S. 505 - 510).

Neben den üblichen Kühl- und Heizeinrichtungen, Zu- und Ableitungen für Reaktionsedukte und -produkte weisen die Reaktorbehälter Rührvorrichtungen auf, die meist aus einem über eine Rührwelle angetriebenen Rührer bestehen und für gewisse Anwendungsfälle zudem Statoren aufweisen, die zur besseren Durchmischung als Stromstörer dienen. Die Rührer selbst sind an meist senkrechten Rührerachsen befestigt, welche entweder von unten oder von oben in den im allgemeinen zylindrischen Reaktorbehälter hineinragen. Der zentrische Einbau von oben in den Reaktorbehälter ist im allgemeinen bevorzugt, da die Abdichtung der Rührerwelle relativ einfach durchgeführt werden kann. Nachteilig ist dabei, dass die Rührerwelle aufgrund der auftretenden Biegemomente einen relativ grossen Durchmesser aufweisen muss. Die Rührereinführung von unten in den Reaktor reduziert dagegen die Rührermasse, erfordert aber gleichzeitig eine aufwendigere Abdichtung der Rührerwelle beim Durchtritt durch den Reaktorboden.

Aus Ullmanns, Enzyclopedia of Industrial Chemistry, 5. Auflage, Volume B2, Kapitel 25 sind unterschiedlichste Rührer, beispielsweise Propellerrührer, Scheibenrührer, Ankerrührer, Impellerrührer, Blattrührer, MIG-Rührer, usw. bekannt.

Im Vergleich zu üblichen Rührverfahren, etwa dem Herstellen und Homogenisieren von Lösungen, treten bei der zweiphasigen Flüssigphasenpolymerisation einige besondere Probleme auf, die für die Reaktorgestaltung und die Betriebsweise besonders bedeutsam sind. Praktisch alle Polymerisationsreaktionen verlaufen exotherm. Die freigesetzte Reaktionsenthalpie kann dabei sehr hohe Werte, bis etwa 4000 kJ/kg erreichen. Die mittleren Mol-Massen der Polymere liegen üblicherweise im Bereich zwischen 10⁴ und 10⁷. Dies bedeutet, dass ähnlich wie bei der Polymerisation in Substanz oder Lösungen die Viskosität während der Reaktion um bis zu sechs 10er Potenzen ansteigen kann. Dies führt zu einer Erschwerung von Stoffaustausch, Wärmeabfuhr , Vermischung und Rührung infolge ansteigender Viskosität des Reaktionsgemisches. Als weiteres Problem kommt die Abnahme der volumenbezogenen Mantelkühlfläche mit ansteigender Reaktorkesselgröße hinzu.

Dementsprechend stellen sich für die Rührer bei der Flüssigphasenpolymerisation in Rührkesselreaktoren besondere Anforderungen. Dazu gehören ein zuverlässiges Homogenisieren und gleichmäßiges Rühren, d. h. es müssen Temperatur- und Konzentrationsunterschiede ausgeglichen und die Bildung von Ruhezonen vermieden werden. Beispielsweise muss bei Zufuhr einer Monomeremulsion von oben oder unten in den Reaktor diese mit der polymerisierenden Reaktionsmischung vermischt werden, um frisches Monomer zu allen Volumenelementen im Reaktor zu führen, so dass die Bildung von nicht spezifikationsgerechtem Polymer vermieden wird. Ausserdem ist bekannt, dass sich in Ruhezonen im Reaktorraum bevorzugt Polymer-Beläge an den Wandungen und Einbauten niederschlagen. Im wesentlichen ist dies eine axiale Förderaufgabe.

Ferner muss der Rührer je nach Reaktionssystem dispergieren, suspendieren oder emulgieren. So kann beispielsweise bei der Emulsionspolymerisation zunächst in einem Ansatzbehälter zwar eine Emulsion aus Wasser, Tensidlösung und Monomerengemisch erzeugt werden, die dann dem Rührkesselreaktor zugeführt wird, jedoch ist bekannt, dass die Monomertröpfchen durch den Rührer weiter zerkleinert werden müssen. Auch bei Reaktionsführungen, bei denen reines Monomer zugegeben wird, muss dieses emulgiert, das heisst in Mikrotropfen zerkleinert und homogenisiert werden. Bevorzugt wird die Zufuhr einer Monomermischung, einer Emulsion oder einer kurz vor Eintritt in den Reaktor gebildeten Monomer/Wasser-Mischung.

Ferner darf der Rührer keine Zonen hoher Scherung bilden, um einerseits Koagulatbildung und andererseits auch Schaumbildung zu verhindern. Es ist nämlich bekannt, dass sich in Zonen besonders hoher Scherung Koagulatstrukturen ausbilden, welche ebenfalls zu nicht spezifikationsgerechtem Produkt führen und das restliche Produkt verunreinigen (Stippen, Feinkoagulat). In extremen Fällen kann ein gesamter Reaktorinhalt koagulieren. Einen guten Überblick über die Problematik geben J.B.P. Soares und A.E. Hamilec "Overview of Emulsion Polym. Reactors`" (Vortrag anläßlich der NATO-Tagung "Recent Advances in Polymeric Dispersions" in Elizonto, Navarra, Spanien, im Juni 1996).

Aus der Deutschen Patentschrift DE-C1-44 21 949 ist ein modifizierter Blattrührer zur Emulsionspolymerisation bekannt, der bevorzugt zur Herstellung von Homo-, Co- oder Pfropfcopolymerisaten des Vinylchlorids verwendet wird. Zur Vermeidung einer übermäßigen Scherung des Polymerlatex und einer daraus resultierenden Koagulatbildung wird ein Blattrührer vorgeschlagen, der scharfe Kanten und eckige Profile vermeidet und dazu nacheilend gebogene, in der Draufsicht tropfenförmig profilierte Außenkanten und abgerundete Ober- und Unterkanten aufweist.

Aus der Japanischen Patentanmeldung JP-A-07 292,002 ist ein Rührkesselreaktor bekannt, der einen Rührer mit mehrstufigem Aufbau zur Emulsionspolymerisation von Polymerlatices beschreibt, wobei wenig Mikrokoagulat produziert wird. Bei den dargestellten Rührern handelt es sich im wesentlichen um ein-, zwei- oder dreistufige modifizierte Blattrührer.

Die WO-A-93 22 350 betrifft ebenfalls verschiedene Rührertypen für Polymerisationen, bei denen wenig Mikrokoagulat produziert werden soll. Auch in dieser Patentanmeldung werden im wesentlichen Varianten von Mehrfach-Blattrührern beschrieben.

Sowohl in JP-A-07,292,002 wie auch in WO-A-93 22 350 werden Rührsysteme beschrieben, die stets Stromstörer und abgewinkelte Rührblätter aufweisen und zu engverteilten Dispersionen führen.

Von besonderer Bedeutung bei der Durchführung von Polymerisationsreaktionen in Rührkesselreaktoren ist die wärmeabfuhr. Will man die vom Stand der Technik her bekannten Kühleinbauten im Reaktorinneren vermeiden, so besteht eine wesentliche Anforderung an das Rührsystem darin, eine hohe Wärmeübertragung mit der Reaktorwand zu gewährleisten. Üblicherweise sind dann außen an der Reaktorwand geeignete Kühleinrichtungen vorgesehen. Die hohe freigesetzte Reaktionsenthalpie bei Polymerisationsreaktionen wird beispielsweise bei der Emulsionspolymerisation noch dadurch verschärft, dass zum Erreichen eines hohen Polymerisationsgrads bei enger Molekulargewichtsverteilung und zur Unterdrückung konkurrierender Nebenreaktionen eine hohe Monomerkonzentration benötigt wird. Damit ist aber auch eine hohe Polymerisationsgeschwindigkeit und eine entsprechend hohe Wärmefreisetzung verbunden, die aus dem System abgeführt werden muss. Bei unzureichender Wärmeabfuhr entstehen, insbesondere bei inhomogen durchmischten Systemen, lokale Temperaturfelder, die die Produktqualität, insbesondere bei vernetzten Polymersystemen, negativ beeinflusst. Es zeigt sich die Notwendigkeit, dazu einen sehr wandgängigen Rührer zu verwenden.

Ferner muss das Rührsystem eine geringe Trombenbildung gewährleisten, damit nur geringe Gasmengen, beispielsweise Schutzgase wie Stickstoff eingezogen, oder verstärkte Schaumbildung der tensidhaltigen Systeme vermieden wird.

Bei einer möglichst grossen Variabilität des Rührsystems hinsichtlich der einsetzbaren Viskositätsbereiche und Monomersysteme soll das Rührorgan einen möglichst geringen Energieverbrauch aufweisen.

Neben der bei der Polymerisationsreaktion entstehenden Reaktionsenthalpie muss auch die vom Rührer in das System eingetragene und desipierte Energie abgeführt werden. Der Leistungseintrag des Rührapparates hängt sowohl von der Viskosität des Reaktionsmediums wie auch von der Rührerdrehzahl ab. Es stellt sich dabei das Problem, dass eine höhere Drehzahl zwar zu einem höheren Wärmeübergangskoeffizienten führt, gleichzeitig jedoch auch der Leistungseintrag durch den Rührer erhöht wird. Es wurde gefunden, dass die eingebrachte Rührleistung im allgemeinen stärker von der Drehzahl abhängt als der Wärmeübergangskoeffizient, so dass die Nettowärmeabfuhr des Gesamtsystems bei einer bestimmten Rührerdrehzahl optimal ist. Diese optimale Drehzahl kann jedoch insbesondere bei der Emulsionspolymerisation aufgrund der Scherempfindlichkeit der Produkte nicht eingestellt werden.

Ebenso ist bekannt, dass die Durchmischung im Reaktor bei hohen Reynolds-Zahlen oberhalb des laminaren Bereichs besonders effektiv ist. Jedoch stellt sich auch hier das Problem, dass der erwünschte turbulente Bereich aufgrund der Scherempfindlichkeit und der Viskosität der Polymerisate oft nicht erreicht werden kann. Stromstörer im Reaktor können zwar die Turbulenz des Mediums erhöhen, sind jedoch nur bei weniger scherempfindlichen Produkten einsetzbar.

Häufig treten bei den zweiphasigen Systemen komplizierte Teilchengrößenverteilungen, wie z. B. eine bi-, tri-, tetra- oder polymodale Verteilung oder enge bzw. breite Verteilungen, oder auch Kombinationen hiervon auf, die zu besonderen Produkteigenschaften führen. Geringe Unterschiede in der Teilchengrößenverteilung, z. B. infolge des Einflusses der hohen Scherbelastungen am Rührer oder den Einbauten, wirken sich demzufolge auf die Endprodukteigenschaften aus. Aus diesem Grund ist die Reproduzierbarkeit der Teilchengrößenverteilung verschiedener Produktpartien in einer bestimmten Reaktor-Rührer-Kombination besonders wichtig.

H. Gerstenberg et al., Chem. Ing. Techn. 54 (1982) 541 - 553, empfehlen Wendel- und Kreuzbalkenrührer für die Substanz- und Lösungspolymerisation, während Kreuzbalken-, Axialflussturbinen-, MIG- und InterMIG-Rührer für die Fällungspolymerisation verwendet werden.

Zopf und Moser, Verfahrenstechnik 8 (1) (1974) 1 - 6 und 8 (2) (1974) 60 - 62, kommen in einer ausführlichen verfahrenstechnischen Studie unter Verwendung von unterschiedlich viskosen Carboxymethylcelluloselösungen als gerührtes Medium zu dem Ergebnis, dass ein Schraubenrührer der geeignetste Rührer für die Emulsionspolymerisation ist. Sie gehen nicht auf die Problematiken der unterschiedlichen Monomere, deren verschiedenartige Löslichkeiten, den Teilchengrößenverteilungen und deren Reproduzierbarkeiten sowie einem Produkt- und Polymerisationsverfahrenswechsel in einem technischen Polymerisationskessel ein.

In A. Echte, Handbuch der technischen Polymerchemie, 1993, wird auf Seite 464 im Zusammenhang mit der Emulsionspolymerisation von Vinylacetat auf diverse Rührer, nämlich Anker-, Impeller-, Gitter- und MIG-Rührer hingewiesen, ohne nähere Auswahlkriterien anzugeben.

Aufgabe der vorliegenden Erfindung ist daher, ein Rührsystem für Rührkesselreaktoren bereitzustellen, welches bei geringem Leistungseintrag und geringer Scherung ein hohes Maß an Durchmischung und Wärmeabfuhr gewährleistet. Das Rührsystem soll sich insbesondere zur Durchführung von Flüssigphasenpolymerisationen, insbesondere von Emulsionspolymerisationen, Suspensionspolymerisationen oder auch Lösungspolymerisationen eignen. Dabei soll aufgrund der Scherempfindlichkeit zahlreicher Polymerisate gegebenenfalls auch auf die Notwendigkeit von stromstörendem Einbauen im Reaktor verzichtet werden können.

Gelöst wird diese Aufgabe durch die Verwendung von mehrstufigen, möglichst wandnah laufenden Rührorganen, die neben einer tangentialen Strömungskomponente auch ein axiales Strömungsfeld erzeugen.

Gegenstand der vorliegenden Erfindung ist demnach die Verwendung mindestens eines ein- oder mehrstufigen Rührers, der neben einer tangentialen Strömungskomponente auch ein axiales Strömungsfeld erzeugt, in einem Rührkesselreaktor bei der Herstellung von Polymerisaten durch Flüssigphasenpolymerisation, ausgenommen Fällungs-, Lösungs- und Substanzpolymerisation (definiert wie eingangs angegeben), insbesondere Heterophasenpolymerisation.

Die Rührereinführung kann dabei von oben, unten oder schräg in den Reaktor erfolgen. Während üblicherweise ein Rührer pro Reaktor verwendet wird, ist auch die Verwendung von mehreren Rührern pro Reaktor möglich. Die Verwendung eines Mehrstufenrührers erzeugt, bei geringem Leistungseintrag durch den Rührer, ein Strömungsfeld mit ausgeprägten Tangential- und Radialkomponenten, so dass sowohl eine gute Homogenisierung wie auch eine effektive Wärmeabfuhr durch Erhöhung des Wärmeübergangskoeffizienten zwischen der Polymerisatlösung und der Reaktorwand gewährleistet ist.

Vorteilhaft ist der Rührer ein Wendelrührer. Wendel- oder Bandrührer sind an sich bekannt und bestehen im allgemeinen aus einer bandförmigen Wendel, die mit Stegen an der Rührerwelle gehalten wird. Während die bandförmige Wendel bei Rotation des Rührers eine ausgeprägte Tangentialkomponente der Strömung in der Polymerisatlösung erzeugt, wird die axiale Komponente durch Verdrängungswirkung im laminaren Strömungbereich hervorgerufen. Wendelrührer sind zumeist wandgängige Rührer, so dass das Verhältnis von Rührerdurchmesser zu Reaktorinnendurchmesser üblicherweise im Bereich von 0,9 bis 0,98 liegt. Typischerweise beträgt das Verhältnis der Breite des Wendelbandes zum Rührerdurchmesser etwa 0,1.

Bei einer anderen erfindungsgemäßen Verwendung ist der Rührer ein Koaxialrührer. Koaxialrührer weisen einen ankerförmigen wandgängigen Rührer und einen koaxialen, schnelllaufenden Zentralrührer mit separatem Antrieb auf. Der wandgängige Ankerrührer erzeugt die Tangentialkomponente der Strömung, während der Zentralrührer, der ein- oder mehrstufig ausgebildet sein kann, die Axialkomponente erzeugt. Als Zentralrührer kommen verschiedenste gängige Rührsysteme in Betracht, deren spezifische Auslegung je nach Aufgabenstellung festgelegt wird. Zur besseren Durchmischung der Grenzschicht an der Behälterwand weist der Ankerrührer häufig Schaberleisten auf, welche die Grenzschicht mechanisch umschichten. Anker- und Zentralrührer drehen im allgemeinen gleichsinnig, jedoch mit unterschiedlicher Drehzahl. Beispielsweise verhindert ein deutlich langsamer drehender Ankerrührer bei hochviskosen Polymerisatlösungen wirksam ein Rotieren des gesamten Behälterinhalts.

Besonders vorteilhaft werden als Mehrstufenrührer Kreuzbalkenrührer, Mehrstromrührer, MIG®- oder INTERMIG®-Rührer eingesetzt. Kreuzbalken- und Mehrstromrührer weisen einen stromlenkenden Aufbau auf, während die MIG®-(Mehrstufen-Impuls-Gegenstromrührer) oder INTERMIG®-Rührer (Interferenz-Mehrstufen-Impuls-Gegenstromrührer) der Firma EKATO mehrere stromlenkende Aufbauten je Rührblatt aufweisen bzw. mehrflächig auslaufen. Der Rührer kann auch als Kombination der genannten Rührer ausgeführt sein, wobei jede Stufe einer der genannten Rührer ist.

Der Rührer kann vorteilhaft zusätzlich mindestens einen Blatt-, Schrägblatt-, Impeller-, Propeller- oder Pfaudler-Rührer aufweisen.

Bei einer Variante der Erfindung ist der Mehrstufenrührer ein Mehrfach-Blattrührer.

Bevorzugt weist der Rührer 2 bis 7 Rührblattstufen auf, die entlang einer Rührerwelle angeordnet sind. Aufeinanderfolgende Rührblattstufen müssen in axialer Richtung nicht notwendigerweise äquidistant angeordnet sein.

Bevorzugt sind aufeinanderfolgende Rührblattstufen gegeneinander um 90° versetzt angeordnet, da die durch diese Orientierung erreichte Massenverteilung des Rührorgans zur geringsten Unwuchtneigung und zur besten Mischwirkung führt. Andere Winkelorientierungen sind aber ebenso möglich.

Vorteilhaft besteht jede Rührblattstufe in radialer Richtung aus zwei- bis sieben-teiligen zentrosymmetrisch angeordneten Rührblättern. Aus Gründen der Gewichtseinsparung wird eine zweiteilige, gegenüberliegende Ausführung bevorzugt.

In Fällen, in denen in dem Rührkesselreaktor keine strombrechenden Einbauten angeordnet sind, beträgt das Verhältnis des Rührerdurchmessers zum Reaktordurchmesser vorteilhaft 0,5 bis 0,98, bevorzugt 0,6 bis 0,95 und besonders bevorzugt 0,7 bis 0,9 beträgt.

In Fällen, in denen in dem Rührkesselreaktor strombrechende Einbauten angeordnet sind, beträgt das Verhältnis des Rührerdurchmessers zum Reaktordurchmesser vorteilhaft 0,5 bis 0,9, bevorzugt 0,55 bis 0,88 und besonders bevorzugt 0,6 bis 0,8. Für Polymerisationsreaktionen erweisen sich möglichst wandgängige Rührer als besonders vorteilhaft.

Für eine besonders gute Homogenisierung liegt das Verhältnis des axialen Abstandes von aufeinanderfolgenden Rührerstufen zum Reaktordurchmesser vorteilhaft im Bereich von 0,75 bis 1,3 und bevorzugt etwa im Bereich von 1.

Bevorzugt beträgt das Verhältnis des Abstandes der untersten Rührstufe vom Boden des Reaktors zum Durchmesser der untersten Rührstufe 0,2 bis 2 und bevorzugt 0,3 bis 1. Vorteilhaft ist unter der untersten Rührstufe ein zusätzliches Rührblatt angeordnet. Mit einem derartigen zusätzlichen Blattrührer kann das nicht gerührte Totvolumen minimiert werden; beispielsweise können kleine Mengen vorgelegter Saatlatices gut gerührt werden.

Bevorzugt sind die Ecken und Kanten der Rührblätter abgerundet, so dass die auf das Polymerisat einwirkenden Scherkräfte auch bei höheren Umdrehungszahlen gering gehalten werden können. Zur Verringerung der Belagsbildung weist der Rührer ausserdem bevorzugt eine glatte Oberfläche auf. Derartige Oberflächen lassen sich beispielsweise entweder mit Rührerbauteilen aus poliertem oder elektropoliertem Edelstahl oder mit emailierten Rührerbauteilen realisieren.

Vorteilhaft beträgt die Drehzahl des Rührers 10 bis 200 Umdrehungen pro Minute. Die gewählte Drehzahl wird dabei im wesentlichen vom Reaktionsmedium, etwa von dessen Viskosität, und den Produkteigenschaften, etwa der Scherempfindlichkeit, bestimmt.

Der Rührkesselreaktor kann eine im wesentlichen zylindrische Form besitzen, wobei das Verhältnis von Reaktorhöhe zu Reaktordurchmesser vorteilhaft 1 bis 7, bevorzugt 1,1 bis 5 und besonders bevorzugt 1,2 bis 3 beträgt.

Bei allen Rührern ist die Führung der Welle auch durch den Reaktorboden möglich, d. h. der Rührer wird vom Boden des Reaktors ausgehend eingebracht und angetrieben.

Bevorzugt werden alle Komponenten durch den Reaktorboden in den Reaktor eingebracht.

Besonders vorteilhaft ist es, wenn der Rührer und die Komponenten vom Boden des Reaktors aus eingebracht sind und der Deckel des Reaktors abnehmbar ist.

Zu Flüssigphasenpolymerisationen zählen die Polymerisationsarten von ethylenisch ungesättigten Monomeren, wie die Suspensions-oder Emulsionspolymerisation, einschließlich Mini-, Mikro- und inverse Emulsionspolymerisation, sowie Polykondensationen und Polyadditionen. Das Polymer kann ein Homo- oder Copolymerisat sein.

Gemäß einer Variante der Erfindung wird der Mehrstufenrührer zur Herstellung von Polymerdispersionen durch Suspensions- oder Emulsionspolymerisation verwendet. Die Polymerdispersionen weisen im allgemeinen einen Feststoffanteil von 30 bis 75 Gew.-%, bevorzugt 50 bis 72 Gew.-% und besonders bevorzugt 52 bis 70 Gew.-% auf.

Die Mehrstufenrührer sind besonders gut zur Herstellung von hochviskosen Polymerdispersionen geeignet. Die dynamische Viskosität liegt im allgemeinen im Bereich von 20 bis 6000 mPas, insbesondere 30 bis 2000 mPas (gemessen nach DIN 53019).

Die Polymerdispersionen können mono- oder polymodal sein und breite oder enge Teilchengrößenverteilung besitzen.

Die Glastemperatur der erhaltenen Polymere liegt im allgemeinen im Bereich von -100 °C bis +150 °C, bevorzugt -60 °C bis +70 °C.

Erfindungsgemäß können die Monomere als vorzugsweise wässrige, Emulsion oder Lösung in Wasser oder einem geeigneten organischen Lösungsmittel in den Reaktor geleitet werden. Gemäß einer besonderen Variante der Erfindung werden die Monomere für die Emulsionspolymerisation als solche (in Substanz) in den Reaktor geführt. Die erfindungsgemäß zur Anwendung kommenden Mehrstufenrührer haben sich als geeignet erwiesen, das Emulgieren, d. h. das Zerkleinern von Tropfen, der Monomere in der wässrigen Phase im Reaktor in Anwesenheit von Emulgatoren oder Schutzkolloiden zu bewirken.

Die Monomere und/oder Reaktionspartner und/oder Hilfsstoffe können sowohl von oben durch den Reaktordeckel, durch die seitlichen Reaktorwände oder, vorzugsweise, von unten durch den Reaktorboden in den Reaktor geleitet werden. Letzteres hat den Vorteil, dass die Bildung von Wandbelägen geringer ist und dass das Einmischen schneller erfolgt. Ausserdem wird der Suspendier- bzw. Emulgierprozess durch den Dichteunterschied unterstützt und es ist weniger Schaumbildung zu beobachten.

Weiter hat sich gezeigt, dass mit Hilfe der erfindungsgemäß zur Anwendung kommenden Rührer die Reproduzierbarkeit der Polymerdispersionen bei Wiederholungen verbessert ist. Dies gilt insbesondere für die Teilchengrößenverteilung.

Für die Polymerisation geeignete ethylenisch ungesättigte Monomere sind insbesondere C₂-C₂₀-α-Olefine, wie Ethylen und Propylen, vinylaromatische Verbindungen, wie Styrol, α-Methylstyrol oder Vinyltoluole, C₁-C₁₂-Alkylvinylether, wie Methyl- oder Ethylvinylether, Vinylester von C₁-C₁₈-Monocarbonsäuren, wie Vinylacetat oder Vinylpropionat, Ester von α,β-ethylenisch ungesättigten Mono-oder Dicarbonsäuren, wie Acryl-, Methacryl- oder Maleinsäure, mit C₁-C₁₂-Alkanolen, wie Methanol, Ethanol, n-Propanol, iso-Propanol, 1-Butanol, 2-Butanol, iso-Butanol, tert.-Butanol und 2-Ethylhexanol, Acrylnitril, Methacrylnitril, Butadien, Isopren, Vinylchlorid, Vinylidenchlorid, α,β-ethylenisch ungesättigte C₃-C₆-Mono- und Dicarbonsäuren, wie Acrylsäure und Methacrylsäure und deren Amide, wie Acrylamid und Methacrylamid sowie deren N-Methylolverbindungen.

Erfindungsgemäß wird der Mehrstufenrührer vorteilhaft zur Herstellung von Dispersionen, insbesondere Styrol-Butadien-Dispersionen, Styrol-Acrylat-Dispersionen, Vinylacetat-Dispersionen, Ethylen-Vinylacetat-Dispersionen oder Acrylat-Dispersionen verwendet. Vorteilhaft werden Dispersionen mit breiter Teilchengrößenverteilung und/oder Dispersionen mit einer Viskosität von 0,01 bis 50 Pas, bevorzugt 0,03 bis 1,50 Pas, hergestellt.

Bevorzugte Polymerisate sind
- Homo- oder Copolymerisate der Acrylsäure- und Methacrylsäureester, insbesonders von Methyl-, Ethyl-, n-Butyl-, tert. -Butyl-, Ethyl-hexylacrylat, Hydroxyethyl- und Hydroxypropylacrylsäureester und -methacrylsäureester
- Homo- oder Copolymerisate des Styrols mit Butadien und/oder (Meth)acrylnitril und/oder den erwähnten (Meth)acrylsäureestern
- Homo- oder Copolymerisate des Vinylacetates und/oder Vinylpropionates mit Ethylen, Butadien oder den erwähnten (Meth)acrylsäureestern.
- Homo- oder Copolymerisate des Vinylchlorids und/oder Vinylidenchlorids mit den erwähnten (Meth)acrylsäureestern, Olefinen oder Vinylaromaten
- Homo- oder Copolymerisate der Acrylsäure, Methacrylsäure oder Maleinsäure mit anderen Säuren oder Säureanhydriden wie Maleinsäure(anhydrid), (Meth)Acrylamid, und/oder Olefinen.

Es hat sich gezeigt, dass bei der Zweiphasenpolymerisation von Monomermischungen, die mehr als ca. 30 Gew.-% eines gut wasserlöslichen Monomers enthalten, welches jedoch in homopolymerisierter Form nicht wasserlöslich ist, während der Polymerisationsreaktion ausreichende Konzentrationen des Monomers in beiden Phasen vorliegen. In diesen Fällen kann auf gute Dispergiereigenschaften der Rührer verzichtet werden. Beispiele für derartige Monomere sind Vinylacetat, Acrylnitril, Methacrylnitril und Methylacrylat.

Die Polymerisationstemperatur beträgt üblicherweise 30 bis 140 °C. Zur Einleitung der Emulsionspolymerisation werden die gebräuchlichen wasserlöslichen Radikalbildner in einer Menge von vorzugsweise 0,05 bis 3 Gew.-%, bezogen auf die Monomerphase, eingesetzt. Beispiele für Radikalbildner sind Peroxide, wie Ammoniumperoxodisulfat, Kaliumperoxodisulfat, Wasserstoffperoxid, Mono-oder Diacylperoxide oder Alkylhydroperoxide sowie Azoverbindungen. Die Initiierung kann entweder direkt durch Temperaturerhöhung oder durch Einsatz von Reduktionsmitteln erfolgen (Redoxsystem).

Als Dispergiermittel können die bei der Emulsionspolymerisation gebräuchlichen ionischen und nichtionischen Emulgatoren oder Schutzkolloide, aber auch Mischungen aus kationischen und anionischen Emulgatoren eingesetzt werden. Vorzugsweise werden 0,1 bis 5,0 Gew.-% Emulgator, bezogen auf die Monomerphase, eingesetzt. Gegebenenfalls können zur Polymerisation noch Puffersubstanzen wie Natriumcarbonat, Natriumhydrogenphosphat oder Alkaliacetate oder Polymerisationsregler oder vernetzend wirkende Monomere wie Bisacrylate oder N-Methylolverbindungen eingesetzt werden.

Die Polymerisation kann kontinuierlich oder diskontinuierlich, mit oder ohne Verwendung von Saatlatices, unter Vorlage aller oder einzelner Bestandteile des Reaktionsgemisches oder unter teilweiser Vorlage und Zulauf der oder einzelner Bestandteile des Reaktionsgemisches oder nach einem Anlaufverfahren ohne Vorlage durchgeführt werden.

Bei der Suspensionspolymerisation, z. B. bei der Polymerisation von Vinylchlorid, Styrol oder Acrylnitril, werden in der Regel größere Partikel gebildet, was erhöhte Anforderungen an die axiale Durchmischung und Suspendierung, d. h. an die Homogenierungsfähigkeiten der Rührer stellt.

Als besonders geeignet erweist sich ein Mehrstufenrührer auch bei der chemischen Nachbehandlung oder Konfektionierung einer Polymerdispersion oder auch bei der Behandlung und/oder Durchmischung einer Polymerdispersion mit Wasserdampf, bei dem die Homogenisierung, die Minimierung der Mischzeiten sowie die Verbesserung des Stoffübergangs im Vordergrund stehen.

Nähere Angaben zur Polymerisation ethylenisch ungesättigter Verbindungen finden sich beispielsweise in Houben-Weyl, Band XIV/1, Makromolekulare Stoffe, Georg Thieme Verlag, Stuttgart, 1961.

Als Polykondensation ist insbesondere die Herstellung von Polyestern, Polyamiden und Kondensationsharzen und als Polyaddition insbesondere die Polyurethanbildung zu erwähnen. Nähere Angaben hierzu finden sich in Houben-Weyl, Band XIV/1, Makromolekulare Stoffe, Georg Thieme Verlag, Stuttgart, 1961.

Die Erfindung wird im folgenden anhand von in der beigefügten Zeichnungen dargestellten Ausführungsformen und anhand von Anwendungsbeispielen dargestellt.

In der Zeichnung zeigt
- Fig. 1: einen schematischen Längsschnitt eines Rührkesselreaktors mit einem MIG®-Rührer;
- Fig. 2: eine Aufsicht auf den Rührer der Fig. 1;
- Fig. 3: eine schematische Teilansicht eines Rührkesselreaktors im Längsschnitt mit einem Wendelrührer;
- Fig. 4: eine schematische Teilansicht eines Rührkesselreaktors im Längsschnitt mit einem Koaxialrührer.

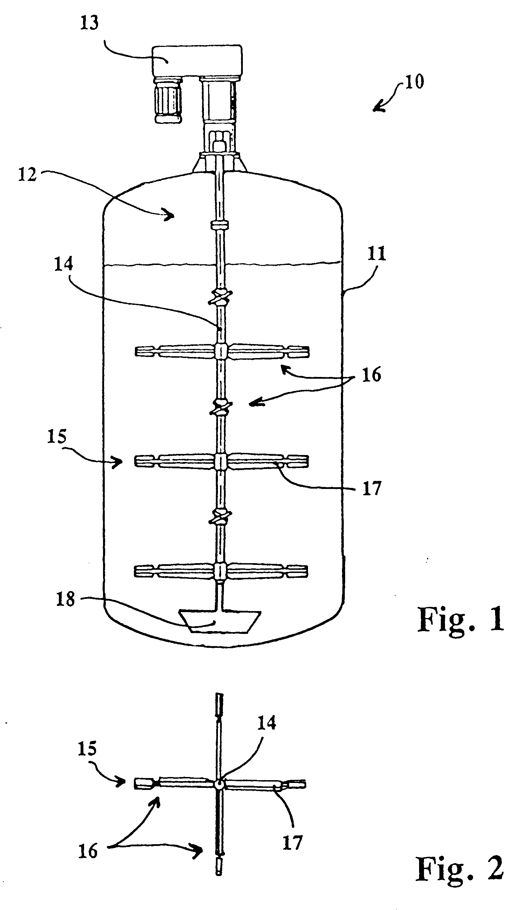

In Figur 1 ist ein Rührkesselreaktor 10 zur Flüssigphasenpolymerisation schematisch dargestellt. Der Reaktor 10 weist einen im wesentlichen zylindrischen Behälter 11 und ein, im dargestellten Fall von oben in den Reaktor geführtes Rührwerk 12 auf. An der Außenwand des Behälters 11 können (nicht dargestellte) Kühleinrichtungen vorgesehen sein. Das Rührwerk 12 besteht aus einem, oben auf dem Behälter 11 angebrachten Elektromotor 13, der über eine Rührwelle 14 den Rührer antreibt.

Im dargestellten Beispiel ist der Rührer ein 6-stufiger EKATO-MIG®-Rührer 15, dessen benachbarten Rührstufen 16, wie insbesondere aus Fig. 2 ersichtlich ist, jeweils um 90 °C gegeneinander verdreht angeordnet sind. Jede Rührstufe 16 besteht aus zweiteiligen, zentrosymmetrisch angeordneten Rührblättern 17. Am unteren Ende der Rührwelle 14 ist ein Blattrührer 18 angeordnet, der das nicht gerührte Totvolumen am Behälterboden minimiert. Zu- und Ableitungen für Reaktionsmedien und gegebenenfalls im Inneren des Behälters 11 angeordnete strombrechende Einbauten sind nicht dargestellt.

In Figur 2 ist eine Aufsicht auf den MIG®-Rührer 15 (ohne Motor 13) der Figur 2 dargestellt. Man erkennt, dass aufeinanderfolgende Rührstufen 16 um 90 °C gegeneinander versetzt sind.

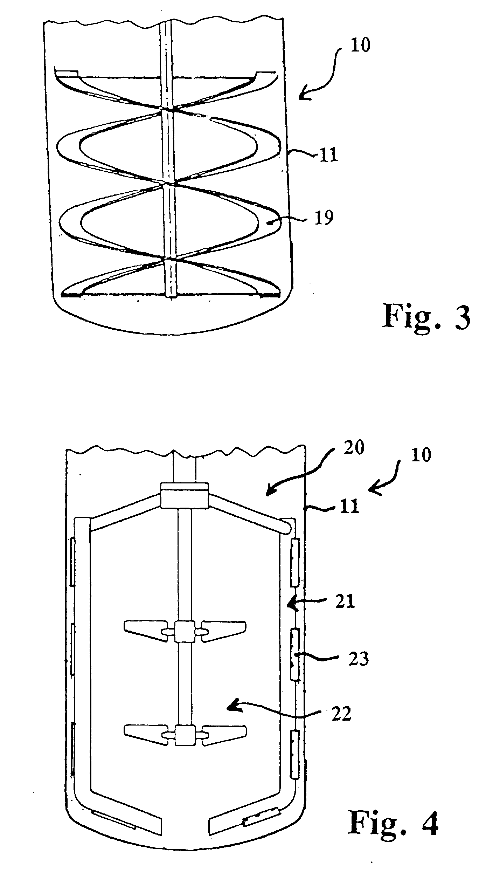

In Figur 3 ist eine Variante dargestellt, bei der in dem Behälter 11 des Rührkesselreaktors 10 ein Wendelrührer 19 angeordnet ist. Hierbei bilden die beiden ineinandergreifenden Wendeln das Merkmal des Mehrstufenrührers.

In Figur 4 erkennt man schließlich eine weitere Variante, bei der ein Koaxialrührer 20 verwendet wird. Der Koaxialrührer 20 besteht aus einem wandgängigen Ankerrührer 21 und einem Zentralrührer 22. Bei der dargestellten Ausführungsform sind am äußeren Rand des Ankerrührers 22 mehrere Schaber 23 erkennbar, welche die Randschicht an der Innenwand des Behälters 11 mechanisch durchmischen. Der Anker kann auch in der unteren Hälfte geschlossen sein.

In den Teilschnitten der Figuren 3 und 4 sind die Antriebsmotoren der Rührwerke nicht dargestellt.

Im folgenden wird die Erfindung anhand von Anwendungsbeispielen näher erläutert.

### Beispiele:

- Emulgator 1:: 20 Gew.-%ige Lösung eines p-Octylphenolethoxilates mit 25 mol Ethylenoxid
- Emulgator 2:: 35 Gew.-%ige Lösung eines Natriumsalzes des sulfatierten p-Nonylphenolethoxilates mit 25 mol Ethylenoxid

### Beispiel 1 (Vergleichsbeispiel):

Der Versuch wird in einem 18 m³ Reaktor mit h/D = 2,1 (Verhältnis Höhe/Durchmesser), versehen mit Blattrührer, d/D = 0,58 (= Durchmesserverhältnis Rührblatt/Reaktor) und 35 UpM durchgeführt. Eine Vorlage bestehend aus 2200 kg Wasser und 10 kg Ascorbinsäure wird auf 80 °C erhitzt. Bei Erreichen von 70 °C Innentemperatur werden 200 kg Natriumpersulfatlösung (2,5 Gew.-%ig) zugegeben. Danach wird begonnen, den Zulauf der Monomeremulsion ME1 kontinuierlich in 210 min und 1740 kg Natriumpersulfatlösung in 240 min zuzugeben, wobei man die Innentemperatur auf 85 °C ansteigen lässt. Während der Zuläufe wird die Mantelkühlung bis an die Kühlgrenze beansprucht. Nach vollständiger Zugabe wird 2 h bei 85 °C gehalten, abgekühlt, mit Ammoniak-Lösung neutralisiert und über ein 250 µm Filter filtriert. Nach Abfiltrieren von rund 5,7 kg Koagulat wird eine Dispersion mit einem Feststoffanteil von 55,7 %, einem pH von 7,3, einem LD-Wert (LD = Lichtdurchlässigkeit, gemessen mit Weißlicht 0,01 gew.-%ig, 25 mm Schichtdicke) von 52 %, einer Viskosität von 77 mPas und einem Feinkoagulatanteil von 0,017 % erhalten. Die Reaktorwand ist stellenweise mit Wandbelag belegt. Die Teilchengrößenverteilung ist tetramodal (s. Tab. 1).

### Zusammensetzung von ME1:

- 1900 kg Wasser
- 970 kg Emulgator 1
- 700 kg Emulgator 2
- 194 kg Acrylsäure
- 1160 kg Acrylnitril
- 8315 kg Butylacrylat

### Beispiel 2:

Beispiel 1 wird in einem 18 m³ Reaktor gleicher Bauart (gleiches Verhältnis Höhe/Durchmesser und gleicher Kühlmantel) mit einem 4 stufigen MIG-Rührer (d/D = 0,85) mit um 90 °C gegeneinander verdrehten Rührblattstufen wiederholt. Die Rührerdrehzahl wird auf 40 UpM gesteigert und die gesamte Kühlkapazität ausgenutzt. Dabei kann die Zulaufszeit der Monomeremulsion auf 180 min reduziert werden; die Initiatorlösung wird, analog Beispiel 1, 30 min länger zugefahren. Danach wird wie bei Beispiel 1 verfahren. Es wird eine koagulatfreie Dispersion mit einem Feststoffanteil von 55,4 %, einem pH von 7,5, einem LD-Wert von 50 %, einer Viskosität von 80 mPas und einem Feinkoagulatanteil von 0,001 % erhalten. Die Teilchengrößenverteilung ist tetramodal (s. Tab. 1). Es findet sich kein Wandbelag. Die Verwendung eines Mehrstufenrührers erlaubt die gleiche Wärmeabfuhr in kürzerer Zeit, vermindert die Wandbelagsbildung und den Feinkoagulatanteil und führt zu reproduzierbarer TGV (TGV =Teilchengrößenverteilung), wenn 10 aufeinanderfolgende Partien verglichen werden.

### Beispiel 3:

Beispiel 2 wird im gleichen Reaktor mit dem Unterschied wiederholt, dass die Zuläufe durch den Reaktorboden zugeführt werden und die Rührerdrehzahl auf 43 UpM gesteigert wird. Dabei kann die Zulaufzeit der Monomeremulsion auf 165 min reduziert werden; die Initiatorlösung wird erneut 30 min länger zugefahren. Es wird eine koagulatfreie Dispersion mit einem Feststoffanteil von 55,3 %, einem pH von 7,5, einem LD-Wert von 49 %, einer Viskosität von 78 mPas und einem Feinkoagulatanteil von 0,001 % erhalten. Die Teilchengrößenverteilung ist tetramodal (s. Tab. 1). Es findet sich kein Wandbelag.

**Tabelle 1**

| Teilchengrößenverteilung (bestimmt durch analytische Ultrazentrifuge, angegeben sind die Massenanteile in den angegebenen Bereichen). Die Werte schwanken im Rahmen der normalen Reproduzierbarkeit der Messung. | | | | | | |
|---|---|---|---|---|---|---|
| Beispiel | <100 nm | 100-200 nm | 200-280 nm | 280-430 nm | 430-600 nm | >600 nm |
| Bsp.1 | 0 | 27 | 16 | 32 | 24 | 1 |
| Bsp.2 | 0 | 28 | 19 | 25 | 27 | 1 |
| Bsp. 3 | 0 | 23 | 24 | 26 | 26 | 1 |

### Beispiel 4:

Beispiel 2 wird im gleichen Reaktor mit dem Unterschied wiederholt, dass ein Zulauf bestehend aus Acrylnitril und Butylacrylat und ein zweiter, wässriger Zulauf, bestehend aus Wasser, Acrylsäure, Emulgatoren und Natriumpersulfat (Mengenverhältnisse wie im Beispiel 1 angegeben) von unten dem Reaktor zugeführt wird. Die beiden Ströme werden kurz vor Reaktoreintritt vermischt. Dabei wird die Rührerdrehzahl auf 45 UpM und die Zulaufzeit auf 180 min gesteigert. Der wässrige Zulauf wird 15 min langsamer zugefahren. Nach vollständiger Zugabe wird 2 weitere Stunden bei Polymerisationstemperatur gehalten, gekühlt und von gebildetem Koagulat filtriert. Es wird eine Dispersion vom Feststoffanteil von 55,3 % und pH-Wert von 7,8 erhalten. Die Teilchengrößenverteilung und Viskosität ist nicht signifikant von Beispiel 3 verschieden.

### Beispiel 5 (Vergleichsbeispiel):

Im Reaktor aus Beispiel 1 wird mit 40 UpM ein Gemisch aus 1980 kg Wasser und 11 kg Ascorbinsäure auf 82 °C erhitzt. Bei Erreichen von 70 °C Innentemperatur werden 230 kg Natriumpersulfatlösung (2,5 Gew.-%ig) zugegeben. Danach wird begonnen, den Zulauf der Monomeremulsion ME5 kontinuierlich in 7 h und 730 kg Natriumpersulfatlösung (7 Gew.-%ig) in 7,25 h zuzugeben. Während der Zuläufe wird die Mantelkühlung bis an die Kühlgrenze beansprucht. Nach vollständiger Zugabe wird 2,5 h bei Polymerisationstemperatur gehalten und über ein 250 µm Filter filtriert. Nach Abfiltrieren von rund 25 kg Koagulat wird eine Dispersion mit einem Feststoffanteil von 65,7 %, einem pH von 4,6, einem LD-Wert von 36 %, einer Viskosität von 250 mPas und einem Feinkoagulatanteil von 0,010 % erhalten. Die Reaktorwand ist leicht mit Wandbelag belegt. Die Teilchengrößenverteilung ist trimodal (s. Tabelle 2).

### Zusammensetzung von ME5:

- 1915 kg Wasser
- 750 kg Emulgator 2
- 227 kg Acrylsäure
- 567 kg Acrylnitril
- 794 kg Vinylacetat
- 9956 kg Butylacrylat

### Beispiel 6:

Beispiel 3 wird mit der Rezeptur von Beispiel 5 wiederholt. Bei Ausnutzung der Kühlkapazitätsgrenze kann die Monomeremulsion in 5,5 h zugefahren werden. Nach Abfiltrieren von rund 3 kg Koagulat wird eine Dispersion mit einem Feststoffanteil von 64,9 %, einem pH von 4,5, einem LD-Wert von 34, einer Viskosität von 227 mPas und einem Feinkoagulatanteil von 0,003 % erhalten. Die Reaktorwand ist wandbelagsfrei. Die Teilchengrößenverteilung ist trimodal (vgl. Tabelle 2).

**Tabelle 2**

| Teilchengrößenverteilung (bestimmt durch analytische Ultrazentrifuge, angegeben sind die Massenanteile in den angegebenen Bereichen). Die Werte schwanken im Rahmen der normalen Reproduzierbarkeit der Messung und stellen Mittelwerte aus 5 Chargen dar. | | | | | | |
|---|---|---|---|---|---|---|
| Beispiel | <100 nm | 100-250 nm | 250-400 nm | 400-600 nm | 600-800 nm | >800 nm |
| Bsp. 5 | 0 | 12 | 40 | 12 | 35 | 1 |
| Bsp.6 | 0 | 12 | 41 | 8 | 36 | 3 |

### Beispiel 7:

Beispiel 5 wird wiederholt mit der Abänderung, dass die erhaltene Dispersion nach vollständiger Zufuhr der Zuläufe 2,5 h nachpolymerisiert wird und dabei 270 kg 10 gew.-%ige tert.-Butylhydroperoxidlösung und nach 5 min eine Lösung von 170 kg 10 gew.-%ige Lösung von Natriumhydroxymethylsulfinsäure (Rongalit C) in 1 h zugegeben werden. Danach liegt der Anteil an Restmonomeren in Summe unter 500 ppm. Die Teilchengrößenverteilung ist wie in Beispiel 5.

## Patentansprüche

1. Verwendung mindestens eines ein- oder mehrstufigen Rührers, der neben einer tangentialen Strömungskomponente auch ein axiales Strömungsfeld erzeugt, in einem Rührkesselreaktor bei der Herstellung von Polymerisaten durch Heterophasenpolymerisation.

2. Verwendung gemäß Anspruch 1, wobei der Rührkesselreaktor keine strombrechenden Einbauten aufweist und das Verhältnis des Rührerdurchmessers zum Reaktordurchmesser 0,5 bis 0,98, bevorzugt 0,6 bis 0,95 und besonders bevorzugt 0,7 bis 0,9 beträgt.

3. Verwendung gemäß einem der Ansprüche 1 oder 2, wobei in dem Rührkesselreaktor mindestens ein strombrechendes Einbauteil vorgesehen ist und das Verhältnis des Rührerdurchmessers zum Reaktordurchmesser 0,5 bis 0,9, bevorzugt 0,55 bis 0,88 und besonders bevorzugt 0,6 bis 0,8 beträgt.

4. Verwendung gemäß einem der Ansprüche 1 bis 3, dadurch gekennzeichnet, dass das Verhältnis des axialen Abstandes von zwei aufeinanderfolgenden Rührerstufen zum Reaktordurchmesser im Bereich von 0,75 bis 1,3 und bevorzugt im Bereich von 1 liegt.

5. Verwendung gemäß einem der Ansprüche 1 bis 4, dadurch gekennzeichnet, dass das Verhältnis des Abstandes der untersten Rührstufe vom Boden des Reaktors zum Durchmesser der untersten Rührstufe 0,2 bis 2 und bevorzugt 0,3 bis 1 beträgt.

6. Verwendung gemäß einem der vorhergehenden Ansprüche, dadurch gekennzeichnet, dass die Heterophasenpolymerisation eine Suspensions- oder Emulsionspolymerisation ist.

7. Verwendung gemäß Anspruch 6 zur Herstellung von Polymerdispersionen mit einem Feststoffanteil zwischen 30 und 75 %, bevorzugt zwischen 50 und 72 % und besonders bevorzugt zwischen 52 und 70 %.

8. Verwendung gemäß einem der Ansprüche 6 oder 7 zur Herstellung von Dispersionen mit einer Viskosität von 0,01 bis 50 Pas.

9. Verwendung gemäß einem der Ansprüche 6 bis 8 zur Herstellung von Styrol-Butadien-Dispersionen, Styrol-Acrylat-Dispersionen, Vinylacetat-Dispersionen oder Acrylat-Dispersionen.

10. Verwendung gemäß einem der Ansprüche 6 bis 9 zur Herstellung einer Polymerdispersion durch Emulsionspolymerisation, dadurch gekennzeichnet, dass man die Monomere als wässrige Emulsion von unten durch den Reaktorboden in den Reaktor führt oder dass man die Monomere in reiner Form in den Reaktor einführt, gegebenenfalls mit der Wasserphase, insbesondere von unten durch den Reaktorboden, und im Reaktor in der wässrigen Phase dispergiert.
